# EUROPEAN PATENT APPLICATION

(11) **EP 2 061 142 A2**
(43) Date of publication of application: **20.05.2009**
(21) Application number: 08169006.7
(22) Date of filing: 13.11.2008
(51) Int. Cl.: H02K 49/10

(54) **Magnetic coupling device for transmitting a rotational movement at two speeds to a driven part**

(30) Priority: 19.11.2007 IT MI20072186
(71) Applicant: Baruffaldi S.p.A., 20067 Tribiano (MI) (IT)
(72) Inventor: Boffelli, Piercarlo, 20067 Tribiano (MI) (IT); Bellotti, Claudio, 20067 Tribiano (MI) (IT); Depoli, Erminio, 20067 Tribiano (MI) (IT); Natale, Fabio, 20067 Tribiano (MI) (IT)
(74) Representative: Raimondi, Margherita

(57) **Abstract**

Device for transmitting the rotational movement from actuating means (1a,1) mounted idle on a bearing (2a) supporting a driven part (2), comprising a first front-engaging magnetic coupling (100) and a second coupling (200) which are designed to transmit a respective first and second different torque to the driven part.

## Description

The present invention relates to a permanent magnet and eddy current device for rotationally actuating driven parts.

It is known in the technical sector relating to the actuation of driven shafts to employ devices based on the use of electromagnetic clutches combined with couplings operating on the eddy current principal.

These types of coupling devices envisage, however, the electrical connection of rotating parts by means of electrical wires which, in turn, involve the introduction of rotating generators and/or commutators which complicate the structure of the transmission device, with the result that it is also costly and difficult to maintain.

The technical problem which is therefore posed is that of providing a coupling for transmitting the rotational movement to a driven part, which is efficient and able to function without electrical connecting wires.

In connection with this problem it is also required that this device should have small dimensions, be easy and inexpensive to produce and assemble and be able to be installed easily in combination with the most widely varying rotating devices such as, for example, those associated with combustion engines of vehicles.

These results are achieved according to the present invention by a device for transmitting the rotational movement from actuating means mounted idle on a bearing supporting a driven part, comprising a first front-engaging magnetic coupling and a second coupling which are designed to transmit a respective first and second different torque to the driven part.

Further details may be obtained from the following description of a non-limiting example of embodiment of the subject of the present invention provided with reference to the accompanying drawings in which:
- Figure 1 shows a schematic cross-section, along the plane indicated by I-I in Fig. 3, of a first example of embodiment of the device according to the present invention;
- Figure 2 shows a schematic cross-section along the plane indicated by II-II in Fig. 1;
- Figure 3 shows a schematic cross-section along the plane indicated by III-III in Fig. 1;
- Figure 4 shows a schematic cross-section, similar to that of Fig. 1, of a second embodiment of the device according to the present invention;
- Figure 5 shows a schematic cross-section along the plane indicated by V-V in Fig. 1;
- Figure 6 shows a schematic cross-section along the plane indicated by VI-VI in Fig. 1;
- Figure 7 shows a schematic cross-section, similar to that of Fig. 1, of a third embodiment of the device according to the present invention;
- Figure 8 shows a schematic cross-section, similar to that of Fig. 1, of a fourth embodiment of the device according to the present invention;
- Figure 9 shows a schematic cross-section along the plane indicated by IX-IX in Fig. 8;
- Figure 10 shows a schematic cross-section along the plane indicated by X-X in Fig. 8;
- Figure 11 shows a schematic cross-section along the plane indicated by XI-XI in Fig. 8; and
- Figure 12 shows a schematic cross-section along the plane indicated by XII-XII in Fig. 8.

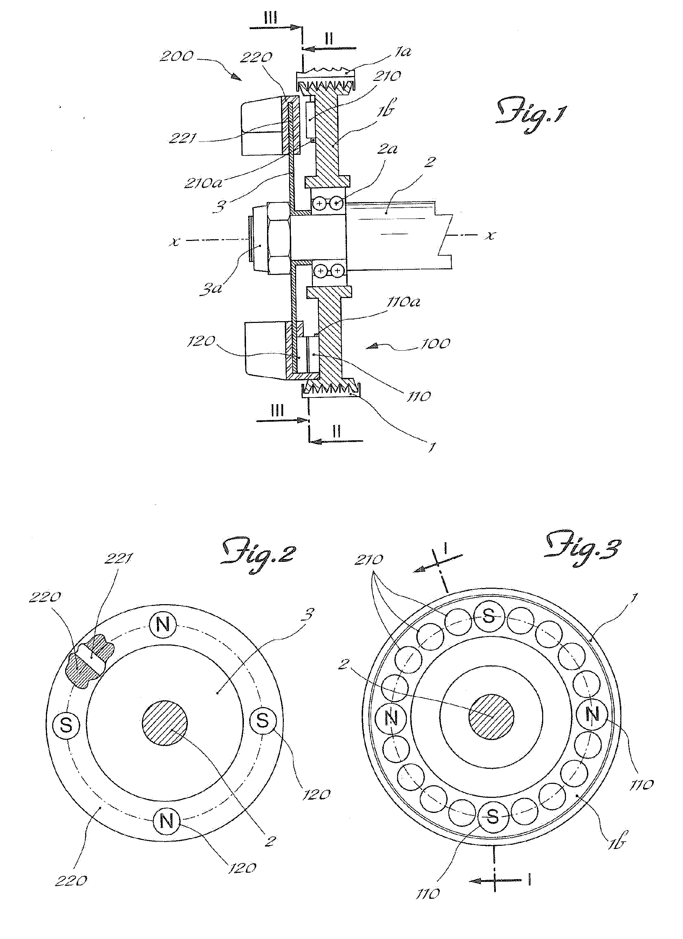

As shown in Fig. 1 and assuming solely for convenience of description and without a limiting meaning a longitudinal axis X-X coinciding with the axis of rotation of a driven shaft 2 mounted on a bearing 2a, the device according to the invention is arranged between the said driven shaft 2, to be rotated, and a pulley 1 for inputting the primary movement, mounted idle on said bearing 2a.

The pulley is designed to receive motive power via a belt 1a, for example from a rotating actuating device of a combustion engine (not shown).

As shown, the device comprises essentially a first magnetic coupling 100 formed by:
- a first series of permanent magnets 110 arranged circumferentially in corresponding seats 110a formed in the disc 1b of the pulley 1 in a suitable radial position and with an alternating polarity NORTH=N and SOUTH=S along the circumference; and
- a second series of magnets 120 joined to a flange 3 which is axially constrained to the driving shaft by means of fixing means 3a.

The magnets 120 of said second series are in turn arranged with an alternating polarity NORTH=N and SOUTH=S and on a diameter corresponding to that of the first series so that the magnets of the two series are situated axially facing each other; in addition it is envisaged that the magnets 110,120 of the two series situated facing each other are in angular synchronism so that the each magnet with polarity SOUTH=S of a series is situated frontally opposite a magnet with polarity NORTH=N of the other series.

Although shown with an arrangement such as to produce an alternation of the polarities N-S between the magnets 110 of the first series and therefore the magnets 120 of the second series, it is also envisaged that, depending on the total number of magnets (magnetic coupling and Foucault coupling) 110, 210 arranged on the circumference, the magnets 110 of the first series may all have the same polarity either N or S, with a consequent corresponding opposite polarity S or N of the magnets 120 of the second series.

The device also comprises a second induction current or Foucault coupling 200 formed by a series of magnets 210 arranged in corresponding seats 210a of the disc 1b of the pulley 1 and situated opposite an annular part 220 which is made of conductive non-magnetic material such as, for example, die-cast aluminium and mounted on the circumferential edge of the said flange 3 which is made of conductive material.

With this configuration the operating principle of the device is as follows:
- when the belt 1a causes rotation of the pulley 1, the magnets N-S 110,120 of the magnetic coupling 100 cause rotation also of the flange 3 and therefore the driven shaft 2;
- as long as the torque values to be transmitted to the driven shaft 2 are less than the magnetic power of the coupling 100, the latter keeps the pulley 1 and the flange 3 in angular engagement so that the driven shaft 2 rotates at a speed equal to the driving speed;
- when the torque transmitted exceeds the magnetic power of the coupling 100, the magnets are no longer in angular synchronism and cease to keep the disc 1 and the flange 3 rotationally engaged, resulting in an interruption in transmission of the motive power to the driven shaft;
- this interruption is, however, limited to a brief transient since the relative speed which is established between disc 1 and flange 3 results in the formation of eddy currents in the second coupling 200 which generates an induction field between the magnets 210 and the ring 220;
- the coupling 200 therefore rotationally drives the flange 3 and thus the driven shaft 2; the speed of rotation of the latter is however reduced owing to the relative slipping between flange 3 and disc 1 which occurs in the Foucault coupling 200.

It is therefore clear how, with the device according to the invention, it is possible to provide a two-speed coupling without the use of electrical connecting wires.

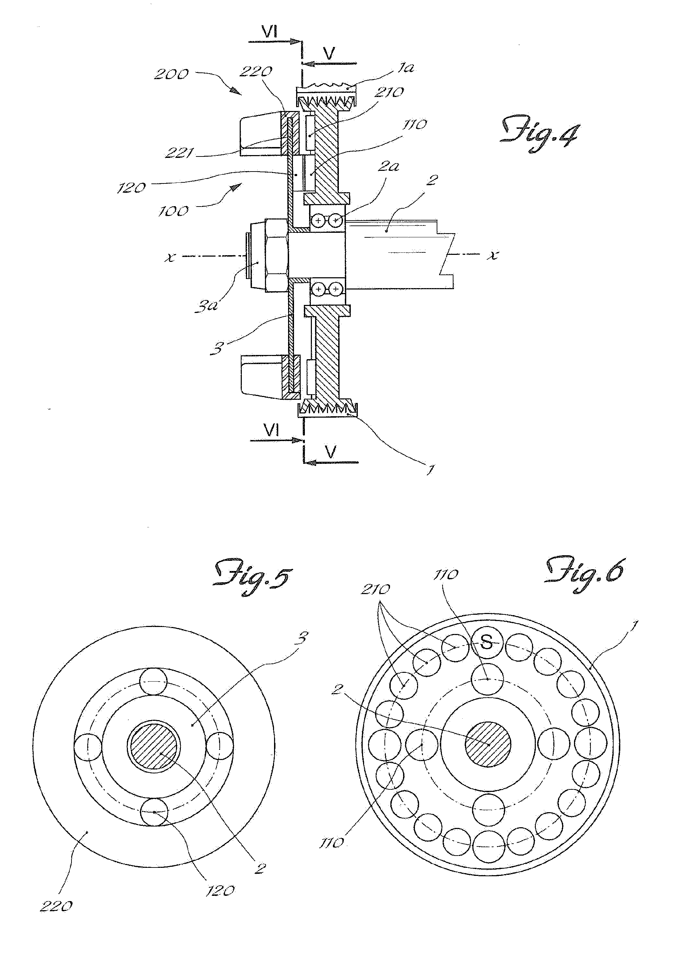

Figs. 4-6 show a second embodiment of the transmission device according to the present invention in which the magnets 110 and 120 of the magnetic coupling 100 are arranged on a diameter which is smaller than that of the magnets 210 of the eddy-current or Foucault coupling 200.

Although not shown, it is envisaged moreover that the magnets 110,120 may be arranged on a diameter which is greater than, instead of smaller than the diameter of the induction coupling 200.

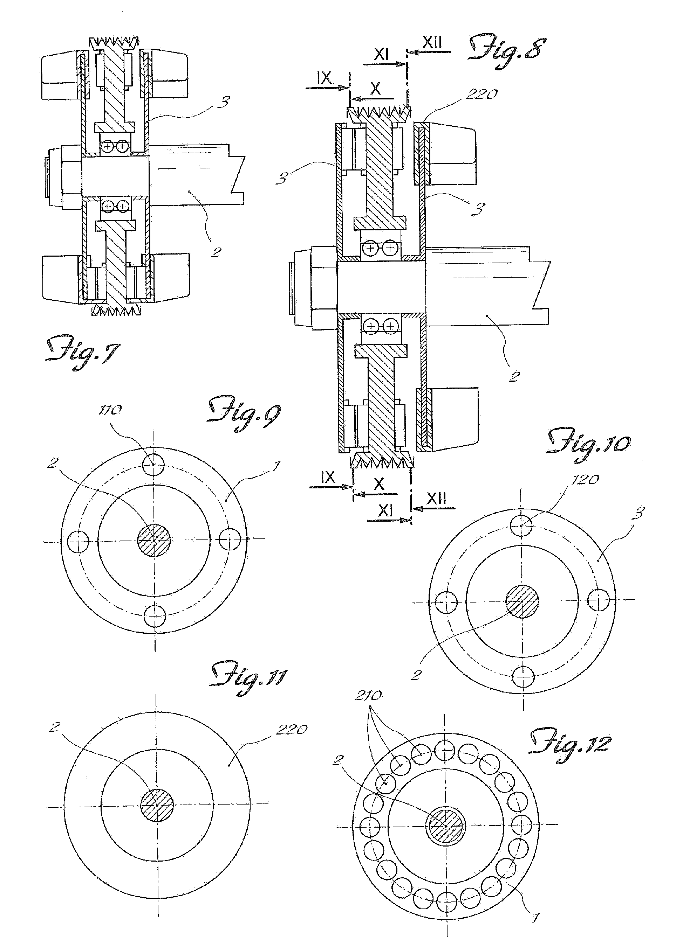

Fig. 7 shows a third embodiment of the transmission device according to the present invention in which the two couplings, i.e. magnetic coupling 100 and Foucault coupling 200, are duplicated on the two opposite sides of the disc 1 symmetrically with respect to a vertical diametral plane according to the orientation shown in the figure and with the addition of a corresponding second internal flange 3; with this configuration it is possible to increase considerably the torque which can be transmitted to the driven shaft in relation to both speeds of rotation.

Fig. 8 shows a fourth embodiment of the transmission device according to the present invention in which the magnetic coupling 100 is arranged on one of the two sides of the disc 1 and the Foucault coupling 200 is arranged on the other side of the said disc; in this case also the addition of the internal flange 3 and an arrangement of the respective magnets 110,120 and 210 is required as per the detail shown in the cross-sections of Figs. 8-12 which is self-explanatory per se and therefore is not described in detail.

According to the invention it is envisaged, moreover, that the second transmission coupling is of the magnetic hysteresis type; in this case the said annular part 220 of the flange 3 is made of material with a high magnetic hysteresis.

Although illustrated and described in a configuration and with terminology referring to a movement which is input on the pulley and output on the driven shaft, it is envisaged that the device may be used in an equivalent manner also with a movement input from the shaft, which becomes the driving shaft, and output on the pulley, which becomes the driven part.

Although the invention has been described in connection with a number of embodiments and a few preferred examples, it is within the technical competence of persons skilled in the art to extend the present invention beyond these embodiments described in a specific manner, it being understood, however, that the scope of protection of the present invention is defined by the claims which follow.

## Claims

1. Device for transmitting the rotational movement from actuating means (1a,1) mounted idle on a bearing (2a) supporting a driven part (2), **characterized in that** it comprises a first front-engaging magnetic coupling (100) and a second coupling (200) which are designed to transmit a respective first and second different torque to the driven part (2).

2. Device according to Claim 1, **characterized in that** said actuating means comprise a pulley (1), the disc (1b) of which is mounted idle on the said bearing (2a).

3. Device according to Claim 2, **characterized in that** the first magnetic coupling (100) comprises a first series of permanent magnets (110) which are arranged circumferentially on a diameter of the disc (1b) of the pulley (1) and with a polarity (N,S) alternating along the circumference, and a second series of magnets (120) which are joined to a flange (3) axially constrained to the driven part (2) and arranged with an angular synchronism such as to arrange the said magnets with an opposite polarity relative to the corresponding magnets (110) of the first series, which are situated axially opposite.

4. Device according to Claim 3, **characterized in that** said magnets (110) of the first series are arranged in corresponding seats (100a) formed in a suitable radial position on the disc (1b) of the pulley (1).

5. Device according to Claim 2, **characterized in that** the magnets (120) of said second series are arranged on a diameter corresponding to that of the first series, so that the magnets of the two series are situated axially opposite each other.

6. Device according to Claim 1, **characterized in that** said second coupling (200) comprises a series of magnets (210) which are arranged on the disc (1b) of the pulley (1) with alternating polarities (N,S) along the circumference and situated axially opposite an annular part (220) of a flange (3) constrained to the driven part (2).

7. Device according to Claim 6, **characterized in that** the magnets (210) of the second coupling (200) are housed in corresponding seats (210a) of the pulley (1).

8. Device according to Claim 2, **characterized in that** the magnets (210) of the second coupling (200) are arranged on a diameter different from that of the magnets (110,120) of the magnetic coupling (100).

9. Device according to Claim 1, **characterized in that** said second coupling (200) is of the eddy current or Foucault type.

10. Device according to Claim 9, **characterized in that** said annular part (220) of the flange (3) is made of conductive non-magnetic material.

11. Device according to Claim 1, **characterized in that** said second coupling (200) is of the magnetic-hysteresis type.

12. Device according to Claim 1, **characterized in that** said annular part (220) of the flange (3) is made of material with a high magnetic hysteresis.

13. Device according to Claim 2, **characterized in that** the first transmission coupling (100) and second transmission coupling (200) are duplicated on the two opposite sides of the disc (1b) of the pulley (1) symmetrically with respect to a vertical diametral plane.

14. Device according to Claim 1, **characterized in that** the magnetic coupling (100) is arranged on one of the two sides of the disc (1) and the Foucault coupling (200) is arranged on the other side of the said disc.

15. Device according to Claim 13 or 14, **characterized in that** it comprises a corresponding second internal flange (3).
